# EUROPEAN PATENT SPECIFICATION

(11) **EP 3 064 517 B1**
(45) Date of publication and mention of the grant of the patent: **26.06.2019**
(21) Application number: 14858741.3
(22) Date of filing: 15.10.2014
(51) Int. Cl.: C08F 220/24, D06M 15/277, C08F 220/34, C08F 220/18

(54) **FLUORINE-CONTAINING POLYMER, AND SURFACE MODIFIER CONTAINING SAME AS ACTIVE INGREDIENT**
FLUORHALTIGES POLYMER UND OBERFLÄCHENMODIFIZIERMITTEL DAMIT ALS WIRKSTOFF
POLYMÈRE FLUORÉ, ET AGENT DE MODIFICATION DE SURFACE LE CONTENANT COMME MATIÈRE ACTIVE

(30) Priority: 01.11.2013 JP 2013228372
(43) Date of publication of application: 07.09.2016
(73) Proprietor: Unimatec Co., Ltd., Tokyo 105-0012 (JP)
(72) Inventor: SHIMADA Kyou, Kitaibaraki-shi Ibaraki 319-1544 (JP); FUJITA Yuko, Kitaibaraki-shi Ibaraki 319-1544 (JP); KANEUMI Yoshiyama, Kitaibaraki-shi Ibaraki 319-1544 (JP)
(74) Representative: Beckmann, Claus
(86) International application number: PCT/JP2014/077395
(87) International publication number: WO 2015/064360

(56) References cited:
- EP-A1- 1 394 232
- EP-A1- 2 189 481
- WO-A1-2004/035708
- WO-A1-2008/153075
- WO-A1-2009/034773
- WO-A1-2013/058156
- JP-A- S62 116 613
- JP-A- 2012 097 125
- JP-A- 2013 091 753
- JP-A- 2014 172 952

## Description

### TECHNICAL FIELD

The present invention relates to a fluorine-containing polymer and a surface-modifying agent containing the polymer as an active ingredient. More specifically, the present invention relates to a fluorine-containing polymer that is a copolymer of a (meth)acrylic acid derivative including a perfluoroalkyl group having 6 or less carbon atoms, the group being known to be low in bioaccumulation potential, and relates to a surface-modifying agent containing the polymer as an active ingredient.

### BACKGROUND ART

Acrylic acid derivatives of perfluoroalkyl group-containing alcohols, for example, CF₃(CF₂)₇CH₂CH₂OCOCH=CH₂, are used in large quantity as synthetic monomers of fluorine-containing copolymers constituting water- and oil-repellents for textile. Perfluoroalkyl alcohols serving as acrylated precursors thereof are widely used as, for example, surfactants. (Patent Document 1)

In Patent Document 2, it is described that in a surface-treating agent of a substrate, the expression of water- and oil-repellency of (meth)acrylate containing a perfluoroalkyl group (Rf) depends on the orientation of the Rf group on a treated film and further described that for the orientation of a Rf group, the presence of melting point in a microcrystal originating in the Rf group (having 8 or more carbon atoms) is required, and, therefore, perfluoroalkyl group-containing (meth)acrylate including a perfluoroalkyl group having 8 or more carbon atoms has been used. In addition, it has been shown that when a perfluoroalkyl group-containing (meth)acrylate including a perfluoroalkyl group having less than 8 carbon atoms is used and the copolymer contains no isocyanate monomer, the contribution to water- and oil-repellent properties is insufficient, while it is observed in the perfluoroalkyl group-containing copolymer including a perfluoroalkyl group having 8 or more carbon atoms.

On the other hand, perfluorooctanoic acid (PFOA) or perfluoroalkyl group-containing carboxylic acid (PFCA) containing a perfluoroalkyl group having 8 or more carbon atoms, which do not exist in nature, have been recently observed to be present in the air, rivers, and so on. It has been reported that, among these compounds, those having perfluoroalkyl groups including about 8 carbon atoms have high bioaccumulation potential and therefore have an environmental problem. Therefore, it is predicted that the manufacturing and the use of these compounds will become difficult in the future.

Note that, presently, it is suggested that a possibility that among telomer compounds to be used as raw materials of surface-modifying agents such as water- and oil-repellents, compounds including perfluoroalkyl groups having 8 or more carbon atoms are converted into PFCA in the environment. Therefore, it is predicted that manufacturing and using these compounds will be restricted. On the other hand, though compounds including perfluoroalkyl groups having 6 or less carbon atoms are recognized to be low in bioaccumulation potential, the compounds including perfluoroalkyl groups having 6 or less carbon atoms are difficult to achieve performance required for products such as surface-modifying agents.

Moreover, fluorine-containing copolymers using perfluoroalkyl (meth)acrylate as a monomer, which are generally used as surface modifiers, such as mold releasing agents or oil barrier agents, have unsatisfactory adhesion to substrates, so that improvement of their processing durability has been required.

EP 1 394 232 A1 describes a water- and oil-repellent composition excellent in durability and excellent in safety and preservation of the environment, which comprises (A) a polymer, (B) an aqueous medium and (C) a surfactant in a mass ratio of (A)/(B)/(C)=100/100-500/1-10, the polymer (A) containing a polymerization unit based on a (meth)acrylate having a polyfluoroalkyl group, a polymerization unit based on an alkyl(meth)acrylate having a C1-C12 alkyl group, a polymerization unit based on an alkyl(meth)acrylate having a C16-C22 alkyl group·and a polymerization unit based on a specific compound having a blocked isocyanate group.

EP 2 189 481 A1 describes a fluorine-containing polymer comprising a fluoroalkyl alcohol (meth)acrylic acid derivative represented by a general formula, CₙF₂ₙ₊₁(CH₂CF₂)ₐ(CF₂CF₂)_{b}(CH₂CH₂)_{c}OCOCR=CH₂ (in the formula, R is a hydrogen atom or a methyl group, n is an integer of 1 to 6, preferably 2 to 4, a is an integer of 1 to 4, b is an integer of 0 to 3, and c is an integer of 1 to 3) containing in 5 to 100 wt.-% as a polymerization unit. A organic solvent solution or aqueous dispersion of the fluorine-containing polymer is effectively used as, for example, a surface-modifying agent such as a water- and oil-repellent or an oil barrier.

### PRIOR ART DOCUMENTS

### PATENT DOCUMENTS

Patent Document 1 : JP-B-63-22237
Patent Document 2 : WO 2004/035708 A1
Patent Document 3 : WO 2009/034773 A1
Patent Document 4 : WO 2010/101091 A1

### OUTLINE OF THE INVENTION

### PROBLEM TO BE SOLVED BY THE INVENTION

An object of the present invention is to provide a fluorine-containing polymer comprising a copolymer of a polyfluoroalkyl alcohol (meth)acrylic acid derivative containing a perfluoroalkyl group having 6 or less carbon atoms, which is expected to have low bioaccumulation potential, and also to provide a surface modifying-agent comprising the fluorine-containing copolymer as an active ingredient and having excellent adhesion to substrates as well as improved processing durability.

### MEANS FOR SOLVING THE PROBLEM

The above object of the present invention can be achieved by a fluorine-containing copolymer consisting of polymerization units based on
(A) a polyfluoroalkyl alcohol (meth)acrylic acid derivative represented by the general formula:

   CₙF₂ₙ₊₁(CH₂CF₂)ₐ(CF₂CF₂)_{b}(CH₂CH₂)_{c}OCOCR=CH₂ [I]

   wherein R is a hydrogen atom or a methyl group, n is an integer of 1 to 6, a is an integer of 1 to 4, b is an integer of 1 to 3, and c is an integer of 1 to 3;
(B) a (meth)acrylic acid ester represented by the general formula:

   CH₂=CRCOOR¹ [II]

   wherein R is a hydrogen atom or a methyl group, R¹ is a C₁-C₃₀ linear, branched, or alicyclic alkyl group, or an aralkyl group;
(C) at least one of NCO group-containing (meth)acrylic acid esters represented by the general formulae:

   CH₂=CRCOOR²NCO [III]

   and

   CH₂=CRCOOR²NHCOR³ [IV]

   wherein R is a hydrogen atom or a methyl group, R² is a C₁-C₃₀ linear or branched alkylene group, and R³ is a group blocking an isocyanate group;
   and up to 10 wt% of polymerization units based on a polyfunctional monomer or oligomer; wherein the (meth)acrylic acid ester represented by general formula [II] is stearyl (meth)acrylate or benzyl (meth)acrylate; and also by a surface modifying-agent comprising the fluorine-containing copolymer as an active ingredient. In the general formula [I] above, it is preferable that n is an integer of 2 to 4, a is an integer of 1 or 2, b is an integer of 1 to 3, and c is an integer of 1 or 2, in terms of the polymerization liquid stability, solubility, polymerization rate, etc., during polymerization.

### EFFECT OF THE INVENTION

When the fluorine-containing polymer of the present invention, which is a copolymer of a polyfluoroalkyl alcohol (meth)acrylic acid derivative, is used as a surface modifying-agent, such as a mold releasing agent or an oil barrier agent, due to the use of a specific crosslinkable group-containing monomer, the crosslinkable group is crosslinked with the hydroxyl group on the substrate surface or self-crosslinked, thereby increasing the durability of the water- and oil-repellent. Moreover, not only because the perfluoroalkyl group comprises 6 or less carbon atoms, which are considered to have low bioaccumulation potential, but also because the CH₂CF₂ group derived from vinylidene fluoride in the molecule easily undergoes HF-elimination to form a double bond, which is vulnerable to degradation as a result of ozone decomposition, the fluorine-containing polymer of the present invention has an excellent effect of causing less harm to the environment. The fluorine-containing polymer can be effectively used as a surface modifying-agent, particularly as a water- and oil-repellent, comprising the fluorine-containing polymer as an active ingredient.

### EMBODIMENTS FOR CARRYING OUT THE INVENTION

Examples of the polyfluoroalkyl alcohol (meth)acrylic acid derivative represented by the general formula:

CₙF₂ₙ₊₁(CH₂CF₂)ₐ(CF₂CF₂)_{b}(CH₂CH₂)_{c}OCOCR=CH₂ [I]

include the following compounds, as shown in Patent Documents 3 and 4, and their corresponding methacrylic acid derivatives:
C₂F₅(CH₂CF₂)(CF₂CF₂)(CH₂CH₂)OCOCH=CH₂ C₄F₉(CH₂CF₂)(CF₂CF₂)(CH₂CH₂)OCOCH=CH₂
C₂F₅(CH₂CF₂)(CF₂CF₂)(CH₂CH₂)₂OCOCH=CH₂ C₄F₉(CH₂CF₂)(CF₂CF₂)(CHCH₂)₂
C₂F₅(CH₂CF₂)(CF₂CF₂)₂(CHCH₂)OCOCH=CH₂ C₄F₉(CH₂CF₂)(CF₂CF₂)₂(CH₂CH₂)OCOCH=CH₂
C₂F₅(CH₂CF₂)(CF₂CF₂)₂(CH₂CH₂)₂OCOCH=CH₂ C₄F₉(CH₂CF₂)(CF₂CF₂)₂(CH₂CH₂)₂OCOCH=CH₂
C₂F₅(CH₂CF₂)(CF₂CF₂)₃(CH₂CH₂)OCOCH=CH₂ C₄F₉(CH₂CF₂)(CF₂CF₂)₃(CH₂CH₂)OCOCH=CH₂
C₂F₅(CH₂CF₂)(CF₂CF₂)₃(CH₂CH₂)₂OCOCH=CH₂ C₄F₉(CH₂CF₂)(CF₂CF₂)₃(CH₂CH₂)₂OCOCH=CH₂
C₂F₅(CH₂CF₂)₂(CF₂CF₂)(CH₂CH₂)OCOCH=CH₂ C₄F₉(CH₂CF₂)₂(CF₂CF₂)(CH₂CH₂)OCOCH=CH₂
C₂F₅(CH₂CF₂)₂(CF₂CF₂)(CH₂CH₂)₂OCOCH=CH₂ C₄F₉(CH₂CF₂)₂(CF₂CF₂)(CH₂CH₂)₂OCOCH=CH₂
C₂F₅(CH₂CF₂)₂(CF₂CF₂)₂(CH₂CH₂)OCOCH=CH₂ C₄F₉(CH₂CF₂)₂(CF₂CF₂)₂(CH₂CH₂)OCOCH=CH₂
C₂F₅(CH₂CF₂)₂(CF₂CF₂)₂(CH₂CH₂)₂OCOCH=CH₂ C₄F₉(CH₂CF₂)₂(CF₂CF₂)₂(CH₂CH₂)₂OCOCH=CH₂
C₂F₅(CH₂CF₂)₂(CF₂CF₂)₃(CH₂CH₂)OCOCH=CH₂ C₄F₉(CH₂CF₂)₂(CF₂CF₂)₃(CH₂CH₂)OCOCH=CH₂
C₂F₅(CH₂CF₂)₂(CF₂CF₂)₃(CH₂CH₂)₂OCOCH=CH₂ C₄F₉(CH₂CF₂)₂(CF₂CF₂)₃(CH₂CH₂)₂OCOCH=CH₂

Furthermore, the (meth)acrylic acid ester represented by the general formula [II] is stearyl (meth)acrylate or benzyl (meth)acrylate as polymerizable fluorine atom-free monomer, from the viewpoint of balanced coating ability, water-repellency, and oil-repellency to a substrate to be treated. Note that the term "(meth)acrylate" denotes acrylate or methacrylate.

In addition, if necessary, a polyfunctional monomer or oligomer can be copolymerized at a ratio of 10 wt% or less in the copolymer, as polymerizable fluorine atom-free monomer. Examples of the polyfunctional monomer or oligomer include ethyleneglycol di(meth)acrylate, propyleneglycol di(meth)acrylate, 1,4-butanediol di(meth)acrylate, 1,6-hexanediol di(meth)acrylate, 1,9-nonanediol di(meth)acrylate, neopentylglycol di(meth)acrylate, tetraethyleneglycol di(meth)acrylate, tripropyleneglycol di(meth)acrylate, polypropyleneglycol di(meth)acrylate, bisphenol A ethylene oxide adduct diacrylate, dimethylol tricyclodecane diacrylate, glycerin methacrylate acrylate, or 3-acryloyloxy glycerin monomethacrylate.

In terms of cost, a copolymer with a higher copolymerization ratio of a fluorine atom-free polymerizable comonomer is advantageous. It is preferable to copolymerize about 99 to 1 wt.%, preferably about 50 to 5 wt.%, of a fluorine atom-free polymerizable monomer in a copolymer with a fluorine-containing polymerizable monomer, in terms of both water- and oil-repellency and cost.

In the copolymer, at least one member selected from NCO group-containing (meth)acrylic acid esters represented by the general formulae:

CH₂=CRCOOR²NCO [III]

and

CH₂=CRCOOR²NHCOR³ [IV]

wherein R is a hydrogen atom or a methyl group, R² is a C₁-C₃₀ linear or branched alkylene group, and R³ is a group blocking an isocyanate group; is further copolymerized as a crosslinkable group-containing monomer at a ratio of about 0.01 to 30 wt.% or less, preferably about 0.1 to 20 wt.%, in the copolymer. Examples of such NCO group-containing (meth)acrylic acid esters include 2-isocyanateethyl (meth)acrylate, 3-isocyanatepropyl (meth)acrylate, 4-isocyanatebutyl (meth)acrylate, etc.; or their diethyl malonate adducts, methyl ethyl ketone oxime adducts, ε-caprolactam adducts, pyrazole adducts, 3,5-dimethylpyrazole adducts, 3-methylpyrazole adducts, 2-butanoneoxime adducts, and the like. When such a crosslinkable group-containing monomer is further copolymerized, the crosslinkable group is crosslinked with the hydroxyl group on the substrate surface or self-crosslinked, thereby increasing the durability of the water- and oil-repellent.

In the polymerization reaction, from the viewpoint of handling convenience, the polymerization is preferably performed in an organic solvent such as 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane and perfluorohexane.

As an initiator used at about 0.1 to 4 wt.%, preferably about 1 to 3 wt.%, based on the total amount of the comonomer, diacyl peroxide, peroxycarbonate, peroxyester, or the like, is used. Specific examples thereof include organic peroxides, such as isobutyryl peroxide, lauroyl peroxide, stearoyl peroxide, succinic acid peroxide, bis(heptafluorobutyryl) peroxide, pentafluorobutyroyl peroxide, bis(4-tert-butylcyclohexyl) peroxy dicarbonate, di-n-propyl peroxy dicarbonate, and diisopropyl peroxy dicarbonate. Depending on the polymerization method, an azo compound, inorganic peroxide, or a redox system thereof can also be used. Depending on the reaction conditions and the composition ratio, the polymerization reaction may hardly progress; in that case, the polymerization initiator may be added again during the polymerization reaction.

Further, a chain transfer agent can be used, if necessary, to adjust the molecular weight. Examples of chain transfer agents include dimethyl ether, methyl t-butyl ether, C₁-C₆ alkanes, methanol, ethanol, 2-propanol, cyclohexane, carbon tetrachloride, chloroform, dichloromethane, methane, ethyl acetate, ethyl malonate, acetone, and the like.

The copolymerization reaction is performed using such a reaction solvent, a reaction initiator, etc., at a reaction temperature of about 0 to 100°C, preferably about 5 to 60°C, particularly preferably about 40 to 50°C. After completion of the reaction, a copolymer solution having a solid matters content of about 5 to 30 wt.% is obtained. The solvent is removed from this reaction mixture, thereby obtaining a fluorine-containing copolymer.

When the remaining unreacted comonomer was analyzed by gas chromatography, it was confirmed that the polyfluoroalkyl alcohol (meth)acrylic acid derivative [I] used in the copolymerization reaction was almost completely copolymerized.

The method for producing a copolymer of the polyfluoroalkyl alcohol (meth)acrylic acid derivative is not limited to the solution polymerization, and, for example, suspension polymerization or emulsion polymerization using water as the dispersion medium in the presence of a nonionic surfactant and/or a cationic surfactant may be employed.

The thus prepared copolymer of the polyfluoroalkyl alcohol (meth)acrylic acid derivative is isolated by a method of evaporation to dryness or aggregation by adding a flocculant such as an inorganic salt, followed by washing with a solvent or the like for purification. The resulting copolymer is subjected to high-performance liquid chromatography to confirm the weight average molecular weight Mw, and the value is to be about 10,000 to 1,000,000.

The polymer solution prepared by the solution polymerization is further diluted with a fluorine-containing organic solvent such as 1,4-bis(trifluoromethyl)benzene or 1,3-bis(trifluoromethyl)benzene, preferably with the same fluorine-containing organic solvent as that used in the polymerization reaction, such that the solid matters content is about 0.01 to 30 wt%, preferably about 0.05 to 5 wt%, and is used as a surface-modifying agent. Regarding, the polymerization product prepared by aqueous emulsion polymerization or suspension polymerization, a surface-modifying agent can be prepared also using the polymerization product as an aqueous dispersion directly or after diluted with water to a solid matters content of about 0.1 to 10 wt%, or as an aqueous dispersion or an organic solvent solution by adding a flocculant to the polymerization reaction solution for aggregating the polymerization product and dispersing in water or dissolving in a fluorine-containing organic solvent the copolymer isolated by washing the polymerization product with water or an organic solvent. The aqueous dispersion preferably containing a surfactant and a water soluble organic solvent in a concentration of 20% or less is used. This aqueous dispersion or organic solvent solution can be used as, for example, a surface-modifying agent such as a water- and oil-repellent or an oil barrier.

The polymer solution composed of the aqueous dispersion or fluorine-containing organic solvent solution of the copolymer can further contain other additives that are necessary for the surface-modifying agent purpose, for example, a cross-linking agent such as a melamine resin, a urea resin, or a blocked isocyanate; a polymer extender; another water repellent such as a silicone resin or oil, or wax; an insecticide; an antistatic agent; a dye stabilizer; a crease preventing agent; and a stain blocker.

The thus prepared surface-modifying agent can be effectively applied to, for example, metals, paper, films, fiber, fabric, woven fabric, carpet, or textile products made of filament, fiber, or yarn as a water- and oil-repellent, or effectively applied to, for example, sliding parts or parts near the sliding parts of precision instrument such as watches, motors, or lenses of digital cameras as an oil barrier for preventing exudation of lubricant oil from a sliding face to the periphery. As the method for the application, coating, dipping, spray, padding, roll coating, or a combination thereof is usually employed. For example, it is used as a pad bath by adjusting the solid matters content of a bath to about 0.1 to 10 wt%. A material to be treated is padded in the pad bath, and then the excessive liquid is removed with a squeeze roll, followed by drying such that the amount of the polymer attached to the material to be treated is about 0.01 to 10 wt%. Subsequently, the material to be treated is dried typically at about 100 to 200°C for about 1 minute to 2 hours to complete the water- and oil-repellent treatment, though it varies depending on the type of the material to be treated.

### EXAMPLES

The following describes the present invention with reference to Examples.

### Synthesis Example

(1) In a 1200-mL autoclave equipped with a stirrer and a thermometer, 603 g (1.17 mol) of
   CF₃(CF₂)₃(CH₂CF₂)(CF₂CF₂)I (99.8GC%)
   and 7 g of di-tertiary butyl peroxide were charged, and the autoclave was deaerated with a vacuum pump. When the inner temperature was increased to 80°C, ethylene was sequentially introduced into the autoclave to adjust the inner pressure to 0.5 MPa. When the inner pressure was decreased to 0.2 MPa, ethylene was introduced again to increase the inner pressure to 0.5 MPa. This process was repeated to introduce 49 g (1.7 mol) of ethylene over about 3 hours, while maintaining the inner temperature at 80 to 115°C. The content was collected at an inner temperature of 50°C or lower to obtain 635 g (yield: 98.8%) of
   CF₃(CF₂)₃(CH₂CF₂)(CF₂CF₂)(CH₂CH₂)I (98.3GC%).
(2) In a 200-mL three-neck flask equipped with a condenser and a thermometer, 100 g (0.18 mol) of
   CF₃(CF₂)₃(CH₂CF₂)(CF₂CF₂)(CH₂CH₂)I (98.3GC%)
   prepared in the above (1) and 100 g (1.68 mol) of N-methyl formamide were charged, followed by stirring at 150°C for 4 hours. After the completion of the reaction, the reaction mixture was washed with 30 mL of water. The lower layer (82.8 g) was mixed with 83 g of a 15 wt% p-toluenesulfonic acid aqueous solution, followed by stirring at 80°C for 8 hours. The reaction mixture was left standing, and then 60 g (yield: 62.6%) of a reaction product (78.4GC%), being a transparent, colorless liquid at room temperature, was obtained as the lower layer.
   The reaction product was subjected to reduced pressure distillation under conditions of an inner pressure of 0.2 kPa, an inner temperature of 100 to 144°C, and a column top temperature of 58 to 59°C to obtain 43.7 g (distillation yield: 88.2%) of a purified reaction product (95.4GC%).
   The resulting purified reaction product was confirmed by the results of ¹H-NMR and ¹⁹F-NMR to be the compound represented by the following formula:

   CF₃(CF₂)₃(CH₂CF₂)(CF₂CF₂)(CH₂CH₂)OH
(3) 40.0g (0.09 mol) of the reaction product (95.4GC%) prepared in the above (2), 21 g of toluene, 1.7 g of p-toluenesulfonic acid, and 0.05 g of hydroquinone were charged in a 100-mL three-neck flask equipped with a condenser and a thermometer. After the inner temperature was increased to 100°C, 10.2 g (0.14 mol) of acrylic acid was added in the flask, followed by stirring at an inner temperature of 115°C for 2 hours. After the completion of the reaction, 72 g of the reaction solution was collected after being cooled. Toluene was removed with an evaporator, and 44.5 g of the residue was washed with tap water to obtain 40.9 g (yield: 82.6%) of a reaction product (86.3GC%), being a transparent, colorless liquid at room temperature, was obtained as the lower layer.

The reaction product was subjected to reduced pressure distillation under conditions of an inner pressure of 0.2 kPa, an inner temperature of 103 to 143°C, and a column top temperature of 60 to 61°C to obtain 15.7 g (distillation yield: 44.1%) of a purified reaction product (99.2GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)(CH₂CH₂)OCOCH=CH₂

[fluorine-containing monomer]

### Example 1

| | |
|---|---|
| Fluorine-containing monomer obtained in the above Synthesis Example | 75 g |
| n-Stearyl methacrylate (Light Ester S, produced by Kyoeisha Chemical Co., Ltd.) | 8.8 g |
| 2-[(3,5-Dimethylpyrazolyl)carbonylamino]ethyl methacrylate (Karenz MOI-BP, produced by Showa Denko K.K.) | 0.2 g |
| 1,4-Bis(trifluoromethyl)benzene | 414 g |

The above components were charged in a 500-ml reactor equipped with a condenser and the air in the reactor was replaced with nitrogen gas for 30 minutes. Further, the following component was gradually added to the reactor (total amount: 500.4 g).

| | |
|---|---|
| Bis(4-tert-butylcyclohexyl)peroxy dicarbonate | 2.4 g |

Then, the temperature in the reactor was gradually raised to 50°C. While stirring the mixture, a polymerization reaction was performed at this temperature for 21 hours.

After completion of the reaction, the reaction product was cooled, thereby obtaining a polymer solution having a solid matters content of 17.3 wt.%. When the unreacted residual comonomer was analyzed by gas chromatography, it was confirmed that 99% or more of the fluorine-containing monomer used in the copolymerization reaction was copolymerized.

The obtained copolymer solution was placed in an oven at 120°C, and the solvent was removed to isolate a fluorine-containing monomer/n-stearyl methacrylate/NCO group-containing monomer copolymer, which had a copolymerization ratio of 89.3:10.5:0.2 by percent by weight, and a weight average molecular weight Mw of 92,000. Mw was measured using a Shodex GPC KD 806M+KD-802+KD-G by the GPC measuring method at a temperature of 40°C and using a 10-mM tetrahydrofuran solution as an eluate at an elution rate of 1 ml/min. The detector used was a differential refractometer, and the analysis was conducted using an SIC Labchart 180 (polystyrene conversion).

1,4-Bis(trifluoromethyl)benzene was added to the copolymer solution so that the solid matters content was diluted to 2 wt.%. The diluted solution (1 ml) was applied to stainless steel plates (SUS plate; 2 x 5 cm), and dried at 180°C for 10 minutes, thereby producing test pieces.

Using the produced test pieces, static contact angles for hexadecane C₁₆H₃₄ and water, which serve as one index of water- and oil-repellency, were measured by the sessile drop method. Measurements were performed before and after cleaning with a 1,4-bis(trifluoromethyl)benzene solvent.

### Example 2

In Example 1, a polymer solution was prepared using the same amount (0.2 parts by weight) of 2-(O-[1'-methylpropylideneamino]carboxyamino)ethyl methacrylate (Karenz MOI-BM, produced by Showa Denko K.K.) in place of 2-[(3,5-dimethylpyrazolyl)carbonylamino]ethyl methacrylate. As a result, a polymer solution having a solid matters content of 17.3 wt.% was obtained. The solvent was removed from the polymer solution to isolate a fluorine-containing monomer/n-stearyl methacrylate/NCO group-containing monomer copolymer, which had a copolymerization ratio of 89.3:10.5:0.2 by percent by weight, and a weight average molecular weight Mw of 90,000.

### Example 3

In Example 1, the following components were charged in the reactor.

| | |
|---|---|
| Fluorine-containing monomer obtained in the above Synthesis Example | 84.6 g |
| Benzyl methacrylate (Acryester BZ, produced by Mitsubishi Rayon Co., Ltd.) | 9.5g |
| 2-[(3,5-Dimethylpyrazolyl)carbonylamino]ethyl methacrylate (Karenz MOI-BP, produced by Showa Denko K.K.) | 0.3 g |
| 1,4-Bis(trifluoromethyl)benzene | 404 g |

Further, the following component was gradually added to thereby prepare a polymer solution.

| | |
|---|---|
| Bis(4-tert-butylcyclohexyl)peroxy dicarbonate | 1.3 g |

As a result, a polymer solution having a solid matters content of 19.1 wt.% was obtained. The solvent was removed from the polymer solution to isolate a fluorine-containing monomer/benzyl methacrylate/NCO group-containing monomer copolymer, which had a copolymerization ratio of 89.7:10.0:0.3 by percent by weight, and a weight average molecular weight Mw of 90,000.

### Example 4

In Example 3, a polymer solution was prepared using the same amount (0.3 parts by weight) of 2-(O-[1'-methylpropylideneamino]carboxyamino)ethyl methacrylate in place of 2-[(3,5-dimethylpyrazolyl)carbonylamino]ethyl methacrylate. As a result, a polymer solution having a solid matters content of 19.1 wt.% was obtained. The solvent was removed from the polymer solution to isolate a fluorine-containing monomer/benzyl methacrylate/NCO group-containing monomer copolymer, which had a copolymerization ratio of 89.7:10.0:0.3 by percent by weight, and a weight average molecular weight Mw of 85,000.

### Example 5

In Example 3, the amount of fluorine-containing monomer was changed to 84.7 parts by weight and 2-[(3,5-dimethylpyrazolyl)carbonylamino]ethyl methacrylate was replaced with 0.5 parts by weight of 2-(O-[1'-methylpropylideneamino]carboxyamino)ethyl methacrylate, and then a polymer solution was prepared. As a result, a polymer solution having a solid matters content of 19.2 wt.% was obtained. The solvent was removed from the polymer solution to isolate a fluorine-containing monomer/benzyl methacrylate/NCO group-containing monomer copolymer, which had a copolymerization ratio of 89.5:10.0:0.5 by percent by weight, and a weight average molecular weight Mw of 83,000.

### Example 6

In Example 3, a polymer solution was prepared using 1.0 parts by weight of 2-(O-[1'-methylpropylideneamino]carboxyamino)ethyl methacrylate in place of 2-[(3,5-dimethylpyrazolyl)carbonylamino]ethyl methacrylate. As a result, a polymer solution having a solid matters content of 19.3 wt.% was obtained. The solvent was removed from the polymer solution to isolate a fluorine-containing monomer/benzyl methacrylate/NCO group-containing monomer copolymer, which had a copolymerization ratio of 89.0:10.0:1.0 by percent by weight, and a weight average molecular weight Mw of 80,000.

### Comparative Example 1

In Example 1, a polymer solution was prepared without using 2-[(3,5-dimethylpyrazolyl)carbonylamino]ethyl methacrylate. As a result, a polymer solution having a solid matters content of 17.2 wt.% was obtained. The solvent was removed from the polymer solution to isolate a fluorine-containing monomer/n-stearyl methacrylate copolymer, which had a copolymerization ratio of 89.5:10.5 by percent by weight, and a weight average molecular weight Mw of 95,000.

### Comparative Example 2

In Example 3, the amount of fluorine-containing monomer was changed to 84.8 parts by weight and a polymer solution was prepared without using 2-[(3,5-dimethylpyrazolyl)carbonylamino]ethyl methacrylate. As a result, a polymer solution having a solid matters content of 19.1 wt.% was obtained. The solvent was removed from the polymer solution to isolate a fluorine-containing monomer/benzyl methacrylate copolymer, which had a copolymerization ratio of 89.9:10.1 by percent by weight, and a weight average molecular weight Mw of 90,000.

The following table shows the measurement results of the static contact angles (unit: degree) of the test pieces obtained in the above Examples and Comparative Examples. The static contact angle of the untreated SUS substrate for C₁₆H₃₄ was 10.5 degrees, and that for water was 93 degrees.

**Table**

| | Ex. | | | | | | Comp. Ex. | |
|---|---|---|---|---|---|---|---|---|
| | 1 | 2 | 3 | 4 | 5 | 6 | 1 | 2 |
| C₁₆H₃₄ [before cleaning with a solvent] | 79 | 80 | 78 | 78 | 79 | 80 | 80 | 77 |
| C₁₆H₃₄ [after cleaning with a solvent] | 78 | 79 | 79 | 75 | 81 | 79 | 41 | 36 |
| water [before cleaning with a solvent] | 120 | 120 | 120 | 120 | 121 | 120 | 120 | 120 |
| water [after cleaning with a solvent] | 123 | 121 | 122 | 123 | 121 | 123 | 104 | 103 |

## Claims

1. A fluorine-containing copolymer consisting of polymerization units based on
(A) a polyfluoroalkyl alcohol (meth)acrylic acid derivative represented by the general formula:
CₙF₂ₙ₊₁(CH₂CF₂)ₐ(CF₂CF₂)_{b}(CH₂CH₂)_{c}OCOCR=CH₂ [I]
wherein R is a hydrogen atom or a methyl group, n is an integer of 1 to 6, a is an integer of 1 to 4, b is an integer of 1 to 3, and c is an integer of 1 to 3;
(B) a (meth)acrylic acid ester represented by the general formula:
CH₂=CRCOOR¹ [II]
wherein R is a hydrogen atom or a methyl group, R¹ is a C₁-C₃₀ linear, branched, or alicyclic alkyl group, or an aralkyl group; and
(C) at least one of NCO group-containing (meth)acrylic acid esters represented by the general formulae:
CH₂=CRCOOR²NCO [III]
and
CH₂=CRCOOR²NHCOR³ [IV]
wherein R is a hydrogen atom or a methyl group, R² is a C₁-C₃₀ linear or branched alkylene group, and R³ is a group blocking an isocyanate group;
and up to 10 wt% of polymerization units based on a polyfunctional monomer or oligomer,
wherein the (meth)acrylic acid ester represented by general formula [II] is stearyl (meth)acrylate or benzyl (meth)acrylate.

2. The fluorine-containing copolymer according to claim 1, which has a weight average molecular weight (Mw) of 10,000 to 1,000,000.

3. The fluorine-containing copolymer according to claim 1, wherein the polyfluoroalkyl alcohol (meth)acrylic acid derivative [I] and the (meth)acrylic acid ester [II] are copolymerized at a weight ratio of 1 to 99:99 to 1.

4. The fluorine-containing copolymer according to claim 3, wherein the polyfluoroalkyl alcohol (meth)acrylic acid derivative [I] and the (meth)acrylic acid ester [II] are copolymerized at a weight ratio of 50 to 95:50 to 5.

5. The fluorine-containing copolymer according to claim 1, wherein at least one of NCO group-containing (meth)acrylic acid esters [III] and [IV] is copolymerized at a ratio of 0.01 to 30 wt.% in the fluorine-containing copolymer.

6. A surface-modifying agent comprising the fluorine-containing polymer according to Claim 1 as an active ingredient.

7. The surface-modifying agent according to Claim 6, wherein the agent is prepared as an organic solvent solution.

8. The surface-modifying agent according to Claim 7, wherein the agent is prepared as a fluorine-containing organic solvent solution.

9. The surface-modifying agent according to Claim 6, 7, or 8, wherein the agent is used as a water- and oil-repellent.

## Patentansprüche

1. Fluorhaltiges Copolymer, bestehend aus Polymerisationseinheiten, basierend auf
(A) einem Polyfluoralkylalkohol(meth)acrylsäurederivat, dargestellt durch die allgemeine Formel:
CₙF₂ₙ₊₁(CH₂CF₂)ₐ(CF₂CF₂)_{b}(CH₂CH₂)_{c}OCOCR=CH₂ [I]
worin R ein Wasserstoffatom oder eine Methylgruppe ist, n eine ganze Zahl von 1 bis 6 ist, a eine ganze Zahl von 1 bis 4 ist, b eine ganze Zahl von 1 bis 3 ist und c eine ganze Zahl von 1 bis 3 ist;
(B) einem (Meth)acrylsäureester, dargestellt durch die allgemeine Formel:
CH₂=CRCOOR¹ [II]
worin R ein Wasserstoffatom oder eine Methylgruppe ist, R¹ eine lineare, verzweigte oder alicyclische C₁-C₃₀-Alkylgruppe oder eine Aralkylgruppe ist, und
(C) wenigstens einem von NCO-Gruppen-haltigen (Meth)acrylsäureestern, dargestellt durch die allgemeinen Formeln:
CH₂=CRCOOR²NCO [III]
und
CH₂=CRCOOR²NHCOR³ [IV]
worin R ein Wasserstoffatom oder eine Methylgruppe ist, R² eine lineare oder verzweigte C₁-C₃₀-Alkylengruppe ist und R³ eine Gruppe, die eine Isocyanatgruppe blockiert, ist,
und bis zu 10 Gew.-% an Polymerisationseinheiten, basierend auf einem polyfunktionellen Monomer oder Oligomer,
wobei der durch die allgemeine Formel [II] dargestellte (Meth)acrylsäureester Stearyl(meth)acrylat oder Benzyl(meth)acrylat ist.

2. Fluorhaltiges Copolymer gemäß Anspruch 1, das ein gewichtsmittleres Molekulargewicht (Mw) von 10.000 bis 1.000.000 hat.

3. Fluorhaltiges Copolymer gemäß Anspruch 1, wobei das Polyfluoralkylalkohol(meth)acrylsäurederivat [I] und der (Meth)acrylsäureester [II] bei einem Gewichtsverhältnis von 1 bis 99:99 bis 1 copolymerisiert sind.

4. Fluorhaltiges Copolymer gemäß Anspruch 3, wobei das Po-lyfluoralkylalkohol(meth)acrylsäurederivat [I] und der (Meth)acrylsäureester [II] bei einem Gewichtsverhältnis von 50 bis 95:50 bis 5 copolymerisiert sind.

5. Fluorhaltiges Copolymer gemäß Anspruch 1, wobei wenigstens einer der NCO-Gruppen-haltigen (Meth)acrylsäureester [III] und [IV] bei einem Anteil von 0,01 bis 30 Gew.-% in dem fluorhaltigen Copolymer copolymerisiert ist.

6. Oberflächenmodifizierendes Mittel, das das fluorhaltige Polymer gemäß Anspruch 1 als einen aktiven Inhaltsstoff umfasst.

7. Oberflächenmodifizierendes Mittel gemäß Anspruch 6, wobei das Mittel als eine Lösung in einem organischen Lösungsmittel hergestellt ist.

8. Oberflächenmodifizierendes Mittel gemäß Anspruch 7, wobei das Mittel als eine Lösung in einem fluorhaltigen organischen Lösungsmittel hergestellt ist.

9. Oberflächenmodifizierendes Mittel gemäß Anspruch 6, 7 oder 8, wobei das Mittel als ein wasserabweisendes und ölabweisendes Mittel verwendet wird.

## Revendications

1. Copolymère contenant du fluor constitué de motifs de polymérisation à base
(A) d'un dérivé d'acide (méth)acrylique d'alcool polyfluoroalkyle représenté par la formule générale :
CₙF₂ₙ₊₁(CH₂CF₂)ₐ(CF₂CF₂)_{b}(CH₂CH₂)_{c}OCOCR=CH₂ [I]
dans laquelle R est un atome d'hydrogène ou un groupe méthyle, n est un nombre entier de 1 à 6, a est un nombre entier de 1 à 4, b est un nombre entier de 1 à 3, et c est un nombre entier de 1 à 3 ;
(B) d'un ester d'acide (méth)acrylique représenté par la formule générale :
CH₂=CRCOOR¹ [II]
dans laquelle R est un atome d'hydrogène ou un groupe méthyle, R¹ est soit un groupe alkyle alicyclique ou un groupe aralkyle linéaire, ramifié en C₁-C₃₀ ; et
(C) d'au moins un des esters d'acide (méth)acrylique contenant un groupe NCO représenté par la formule générale :
CH₂=CRCOOR²NCO [III]
et
CH₂=CRCOOR²NHCOR³ [IV]
dans lesquelles R est un atome d'hydrogène ou un groupe méthyle, R2 est un groupe alkylène linéaire ou ramifié en C₁-C₃₀, et R3 est un groupe bloquant un groupe isocyanate ;
et jusqu'à 10 % en poids de motifs de polymérisation à base d'un monomère ou oligomère polyfonctionnel,
dans lequel l'ester d'acide (méth)acrylique représenté par la formule générale [II] est un (méth)acrylate de stéaryle ou un (méth)acrylate de benzyle.

2. Copolymère contenant du fluor selon la revendication 1, qui a un poids moléculaire moyen (Pm) de 10 000 à 1 000 000.

3. Copolymère contenant du fluor selon la revendication 1, dans lequel le dérivé d'acide (méth)acrylique d'alcool polyfluoroalkyle [I] et l'ester d'acide (méth)acrylique [II] sont copolymérisés à un rapport de poids entre 1/99 et 99/1.

4. Copolymère contenant du fluor selon la revendication 3, dans lequel le dérivé d'acide (méth)acrylique d'alcool polyfluoroalkyle [I] et l'ester d'acide (méth)acrylique [II] sont copolymérisés à un rapport de poids entre 50/95 et 50/5.

5. Copolymère contenant du fluor selon la revendication 1, dans lequel au moins un des esters d'acide (méth)acrylique contenant un groupe NCO [III] et [IV] est copolymérisé à un rapport entre 0,01 et 30 % en poids dans le copolymère contenant du fluor.

6. Agent modificateur de surface comprenant le polymère contenant du fluor selon la revendication 1 en tant que principe actif.

7. Agent modificateur de surface selon la revendication 6, dans lequel l'agent est préparé en tant que solution de solvant organique.

8. Agent modificateur de surface selon la revendication 7, dans lequel l'agent est préparé en tant que solution de solvant organique contenant du fluor.

9. Agent modificateur de surface selon la revendication 6, 7 ou 8, dans lequel l'agent est utilisé en tant qu'agent hydrophobe et oléophobe.
